# EUROPÄISCHE PATENTSCHRIFT

(11) **EP 3 007 907 B1**
(45) Veröffentlichungstag und Bekanntmachung des Hinweises auf die Patenterteilung: **18.12.2019**
(21) Anmeldenummer: 14724448.7
(22) Anmeldetag: 15.05.2014
(51) Int. Cl.: B60B 19/08, B60B 7/06, B60B 7/00

(54) **RAD EINES KRAFTFAHRZEUGS MIT EINER VERKLEIDUNG DES SPEICHEN-RAUMES**
WHEEL OF A MOTOR VEHICLE WITH A SPOKE AREA COVER
ROUE DE VÉHICULE AUTOMOBILE AVEC HABILLAGE DE L'ESPACE ENTRE LES RAYONS

(30) Priorität: 14.06.2013 DE 102013211216
(43) Veröffentlichungstag der Anmeldung: 20.04.2016
(73) Patentinhaber: Bayerische Motoren Werke Aktiengesellschaft, 80809 München (DE)
(72) Erfinder: GIELISCH, Sebastian, 85716 Unterschleissheim (DE)
(86) Internationale Anmeldenummer: PCT/EP2014/059991
(87) Internationale Veröffentlichungsnummer: WO 2014/198482

(56) Entgegenhaltungen:
- EP-A1- 1 647 417
- FR-A1- 2 838 674
- US-A- 2 012 449
- US-A1- 2008 001 468

## Beschreibung

Die Erfindung betrifft ein Rad eines Kraftfahrzeugs mit einem Nabenabschnitt, von diesem radial nach außen abgehenden Speichen und einer auf den Speichen abgestützten Felge, sowie mit einer von der Felge begrenzten Verkleidung des Speichen-Raumes, ), die beidseitig der Speichen, das heißt deren Innenseiten zugewandt und deren Außenseiten zugewandt, vorgesehen ist. Zum Stand der Technik wird neben der DE 10 2009 024 792 A1 insbesondere auf die US 2008/0001468 A1 verwiesen.

Abdeckscheiben oder Abdeckelemente für Kraftfahrzeug-Räder, welche umgangssprachlich auch als Felgen bezeichnet werden, sind in verschiedenen Ausführungsformen bekannt. Eine solche Abdeckscheibe, welche in der o.g. Schrift für eine "Felge" vorgeschlagen ist, tatsächlich jedoch den die Speichen enthaltenden Ring-Raum zwischen dem Nabenabschnitt und der eigentlichen Felge, auf welche ein Rad-Reifen aufgezogen wird, abdeckt, wird vorliegend als Verkleidung des Speichen-Raumes bezeichnet, wobei der Speichen-Raum der besagte Ring-Raum zwischen dem Nabenabschnitt und der Felge ist. Beim Stand der Technik nach der eingangs erstgenannten Schrift ist diese Verkleidung auf der Innenseite der Speichen (im am Fahrzeug montierten Zustand) vorgesehen, um die Beaufschlagung der Speichen mit Abrieb der in der gemeinhin sog. Felgenschüssel liegenden Reibungsbremse des Fahrzeugs zumindest zu reduzieren, und es besteht diese Verkleidung (bzw. dieses Abdeckelement) aus Kunststoff, insbesondere Polycarbonat.

Grundsätzlich erfüllt eine bekannte Verkleidung die vorhergehend genannte Anforderung, jedoch werden an Kraftfahrzeug-Räder und dabei auch an solche mit Speichen, welche insbesondere bei Verwendung geeigneter Werkstoffe vorteilhaft leicht bauend gestaltet werden können, weitere Anforderungen gestellt, so hinsichtlich einer weitestgehenden Minimierung des Luftwiderstand-Beiwertes des Kraftfahrzeugs.

Insbesondere für ein Rad eines zweispurigen Kraftfahrzeugs mit beidseitiger Verkleidung des Speichen-Raumes soll nun eine zuverlässige und wartungsfreundliche Gestaltung aufgezeigt werden (= Aufgabe der vorliegenden Erfindung). Die Lösung dieser Aufgabe ergibt sich für ein Rad nach dem Oberbegriff des Anspruchs 1 mit den kennzeichnenden Merkmalen des Anspruchs 1; vorteilhafte Weiterbildungen sind Inhalt der Unteransprüche.

Indem nicht nur an der den Innenseiten der Speichen (im am Fahrzeug verbauten Zustand des Rades) zugewandten Seite des Rades, sondern auch an der den Außenseiten der Speichen (im am Fahrzeug verbauten Zustand des Rades) zugewandten Seite des Rades eine sich zumindest zwischen der Felge und dem Nabenabschnitt erstreckende Verkleidung des zwischen dem Nabenabschnitt und der Felge liegenden Speichen-Raumes vorgesehen ist, werden Luftwirbel, die sich ohne eine solche Verkleidung während der Fahrt des Fahrzeugs an den Speichen bilden würden, vermieden, was einen verringerten Luftwiderstand des Kraftfahrzeugs zur Folge hat. Dabei weisen die den Ringraum, in welchem sich die Speichen befinden (= "Speichen-Raum"), beidseitig abdeckenden Verkleidungen eine "stetige" bzw. glatte Oberfläche auf, d.h. dass beliebige Schnitte, die durch diese Verkleidungen gelegt werden, keinen sprungartigen Verlauf aufweisen sollten, damit sich bei der Fahrt des Kraftfahrzeugs auf deren Oberfläche eine möglichst verlustarme Luftströmung ausbilden kann.

Wenn die innenseitige, in einer Projektion in Richtung der Rad-Drehachse betrachtet ringförmige Verkleidung mit dem Rand des Nabenabschnitts des Rades und einem Ringbereich der Felge und/oder den Innenseiten der Speichen verklebt ist, so ist an dieser Stelle eine sichere Abdichtung gegen den Eintritt von Bremsenabrieb oder anderen Schmutz- oder Staubpartikeln in den Speichen-Raum gewährleistet. Vorteilhafterweise ist diese Verbindungstechnik des Klebens auch einfach darstellbar, wobei diese innere Verkleidung analog dem bekannten Stand der Technik in Kunststoff ausgeführt sein kann, aber auch aus einem anderen geeigneten Werkstoff bestehen kann.

Es kann die außenseitige Verkleidung vollflächig, d.h. sich vollständig innerhalb der Felge erstreckend ausgebildet sein oder kann die außenseitige Verkleidung wie die innenseitige Verkleidung in einer Projektion in Richtung der Rad-Drehachse betrachtet ringförmig ausgeführt sein und sich somit zwischen der Felge und dem Nabenabschnitt des Rades erstrecken. In vorteilhafter Weise ist die außenseitige Verkleidung (für den Fall einer optischen Schädigung) austauschbar am Rad befestigt und kann hierfür unter Zwischenlage eines Dichtelements mit ihrem Rand in eine Nut in einem Felgenringbereich eingesetzt sein (im erstgenannten Fall einer vollflächigen Verkleidung) oder (im zweitgenannten Fall einer ringförmigen Verkleidung) mit ihren beiden Rändern in Nuten oder dgl. in einem Ringbereich der Felge und im Nabenabschnitt eingesetzt sein.

Über die innenseitige und außenseitige Verkleidung ist der Speichen-Raum somit gegenüber der Umgebung im wesentlichen abgeschottet, so dass ein unerwünschter Schmutzeintrag in den Speichen-Raum im wesentlichen ausgeschlossen ist. Allerdings ist insbesondere wegen der Austauschbarkeit der außenseitigen Verkleidung keine 100%ige Abschottung oder Abdichtung darstellbar. Um die Bildung von Überdruck oder Unterdruck im Speichen-Raum (verursacht durch Temperatureinflüsse wie Sonneneinstrahlung oder Bremsenabwärme und/oder die Luftströmungsverhältnisse bei höheren Fahrgeschwindigkeiten des mit einem erfindungsgemäßen Rad ausgerüsteten Fahrzeugs) zu vermeiden, kann weiterhin zumindest eine überdruckabhängig und/oder unterdruckabhängig gesteuerte Belüftungsöffnung für den durch die Verkleidungen gegenüber der Umgebung abgeschlossenen Speichen-Raum entweder im Nabenabschnitt des Rades oder in einer der Verkleidungen, vorzugsweise in der innenseitigen Verkleidung, vorgesehen sein. Um im Falle eines durch Unterdruck verursachten Eintritts von Luft in den Speichen-Raum den gleichzeitigen Eintritt von Schmutzpartikeln weitestgehend zu verhindern, kann an der besagten Belüftungsöffnung ein geeignetes Luftfilterelement vorgesehen sein. Dabei kann eine einzige Belüftungsöffnung sowohl für Zufuhr als auch Abfuhr von Luft aus dem Speichenraum vorgesehen sein, alternativ können hierfür aber auch verschiedene Belüftungsöffnungen vorgesehen sein.

Um ein Befüllen des auf der Felge eines erfindungsgemäßen Rades aufgezogenen Luftreifens mit Luft zu ermöglichen, kann in der außenseitigen Verkleidung eine vorzugsweise dicht verschließbare Zugangsöffnung zu einem in der Felge vorgesehenen Luftventil zum Befüllen des Luftreifens vorgesehen sein. Alternativ kann im Nabenabschnitt des Rades ein Zentralventil vorgesehen sein, an welches sich eine innerhalb des Rades, bspw. in einer Speiche verlaufende Leitung für die Befüllung des Luftreifens anschließt.

Beispielsweise um eine optische Kontrolle des Speichen-Raumes zu ermöglichen, so beispielsweise zur Überprüfung der sicheren Funktion eines vorhergehend genannten Luftfilterelements an einer Belüftungsöffnung, kann die außenseitige Verkleidung in einem durchsichtigen Kunststoff ausgeführt sein. Vorteilhafterweise ergibt sich damit aufgrund der Sichtbarkeit der Speichen auch ein angenehmes optisches Erscheinungsbild eines erfindungsgemäßen Rades.

Eine vorteilhafte Anordnung eines erfindungsgemäßen Rades an einem Radträger eines zweispurigen Kraftfahrzeugs ergibt sich zusammen mit einer wie üblich in der von der Felge begrenzten Radschüssel - dies ist bekanntlich der innenseitige, hinter den Speichen liegende annähernd kreiszylindrische "Hohlraum" der für Kraftfahrzeuge üblichen Räder - angeordneten Radbremse, wenn am Radträger quasi fahrzeugfest eine Abdeckscheibe befestigt ist, deren Rand vorzugsweise im Bereich des inneren Felgenhorns liegt, da hiermit der durch das Rad verursachte Luftwiderstand insbesondere bei höher Fahrgeschwindigkeit des Fahrzeugs weiter reduziert werden kann. Um im Bedarfsfall eine ausreichende Kühlung der wie üblich als Reibungsbremse ausgeführten Radbremse zu ermöglichen, kann in dieser Abdeckscheibe eine auf die Reibungsbremse gerichtete Zufuhröffnung für Kühlluft sowie eine Abfuhröffnung für die zugeführte Kühlluft vorgesehen sein.

In den beigefügten Prinzipskizzen sind Ausführungsbeispiele bzw. Details von Ausführungsbeispielen der vorliegenden Erfindung dargestellt. So zeigt
**Figur 1** einen Längsschnitt durch ein erfindungsgemäßes und an einem Radträger eines Personenkraftwagens montiertes Fahrzeug-Rad,
**Figur 2** die untere Hälfte dieses Rades in vergrößerter Darstellung,
**Figur 3** die obere Hälfte dieses Rades in vergrößerter Darstellung,
**Figur 4** einen Schnitt durch den Nabenabschnitt des Rades in einer zur Rad-Drehachse senkrechten Ebene, sowie
**Figur 5** in einer Darstellung analog Fig.3 ein anderes Ausführungsbeispiel.

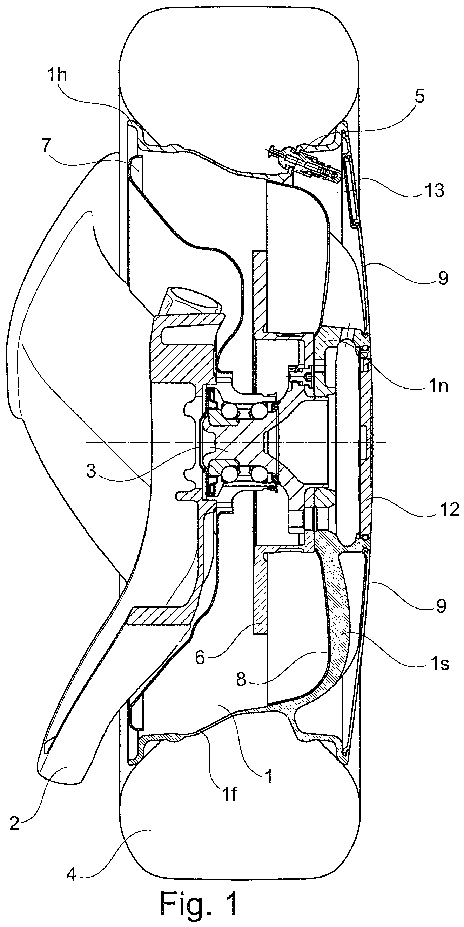

Zunächst auf **Fig.1** Bezug nehmend ist mit der Bezugsziffer 1 ein erfindungsgemäßes Rad in seiner Gesamtheit bezeichnet, welches wie üblich eine Felge 1f, mehrere Speichen 1s sowie einen Nabenabschnitt 1n aufweist. Mit seinem Nabenabschnitt 1n ist dieses Rad 1 an eine drehbar auf einem wie üblich über mehrere Lenker am Fahrzeug befestigten und somit quasi fahrzeugfesten Radträger 2 des Fahrzeugs gelagerte Nabe 3 angeflanscht. Auf die weiteren Details dieser Figur 1 muss (zunächst) nicht näher eingegangen werden; lediglich kurz erwähnt seien lediglich ein auf die Felge 1f des Rades 1 aufgezogener Reifen 4, ein in der Felge 1f vorgesehenes Ventil 5 für die Befüllung dieses Reifens 4 mit Luft, eine zwischen dem Rad 1 und der Nabe 3 liegende Bremsscheibe 6, sowie eine vor der Figurenbeschreibung zuletzt erwähnte quasi fahrzeugfeste Abdeckscheibe 7, die innerhalb der Felgenschüssel des Rades 1 liegt und die solchermaßen geformt ist, dass deren Rand annähernd in der Ebene des inneren Felgenhorns 1h liegt.

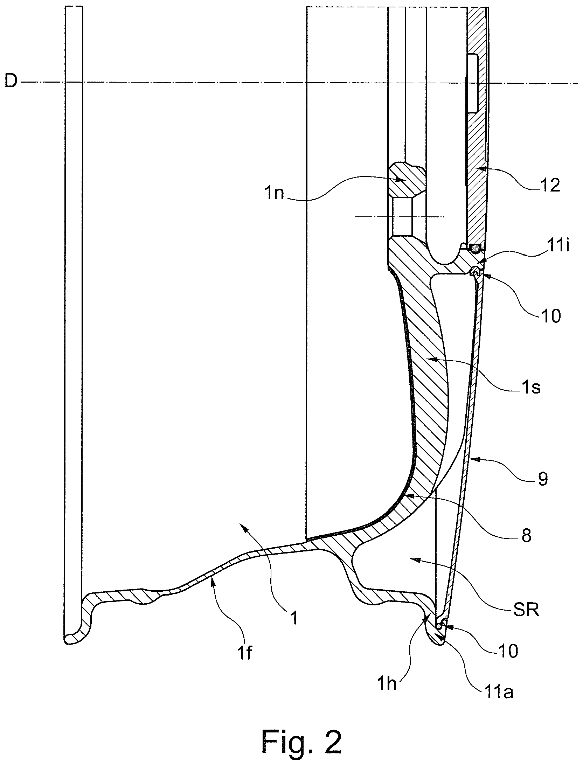

**Figur 2** zeigt eine Hälfte des Rades 1 aus Fig.1 vergrößert. Hier erkennt man eine innenseitige Verkleidung 8 des sog. Speichen-Raumes SR, die vorzugsweise auch an den Innenseiten der Speichen 1s sowie insbesondere an den Nabenabschnitt 1n und an einen Abschnitt der der Drehachse D des Rades 1 zugewandten Wand der Felge 1f angeklebt ist und die beispielsweise aus hochfestem Kunststoff wie einem CFK-Material, oder aus einer dünnen Aluminiumlegierung oder einem anderen geeigneten Werkstoff mit geringem spezifischem Gewicht besteht. Vorgesehen ist weiterhin eine außenseitige Verkleidung 9 des Speichen-Raumes SR, die mit ihrem bezüglich der Drehachse D äußeren Rand unter Zwischenlage einer Dichtung 10 in eine Nut 11a in der der Drehachse D zugewandten Seite des Felgenhorns 1h eingesetzt ist. Diese außenseitige Verkleidung 9 ist in Richtung der Drehachse D betrachtet ringförmig und mit ihrem inneren Rand ebenfalls unter Zwischenlage einer Dichtung 10 in eine Nut 11i in einer der Drehachse D abgewandten Ringfläche des Nabenabschnitts 1n des Rades 1 eingesetzt. Wie ersichtlich ist diese Verkleidung 9 geringfügig gewölbt ausgeführt, so dass auf der Außenseite des Rades 1 zusammen mit einem zentralen Abdeckelement 12 des Nabenabschnitts 1n, welches vergleichbar der Verkleidung 9 am Nabenabschnitt 1n befestigt ist, eine bei Fortbewegung eines mit diesem Rad 1 ausgerüsteten Kraftfahrzeugs strömungsgünstige Oberfläche vorliegt. Dabei wird vorliegend der von der innenseitigen Verkleidung 8 und der außenseitigen Verkleidung 9 sowie vom Nabenabschnitt 1n und einem außenliegenden Abschnitt der Felge begrenzte zusammenhängende Raum, in welchem sich auch die Speichen 1s des Rades 1 befinden, als Speichen-Raum SR bezeichnet. Wie vor der Figurenbeschreibung ausgeführt ist die Befestigung der außenseitigen Verkleidung 9 in den besagten Nuten 11a und 11i vorgesehen, um diese außenseitige Verkleidung 9 austauschen zu können, wobei die Dichtungen 10 den Eintritt von Schmutz- oder Staubpartikeln in den Speichen-Raum SR verhindern sollen.

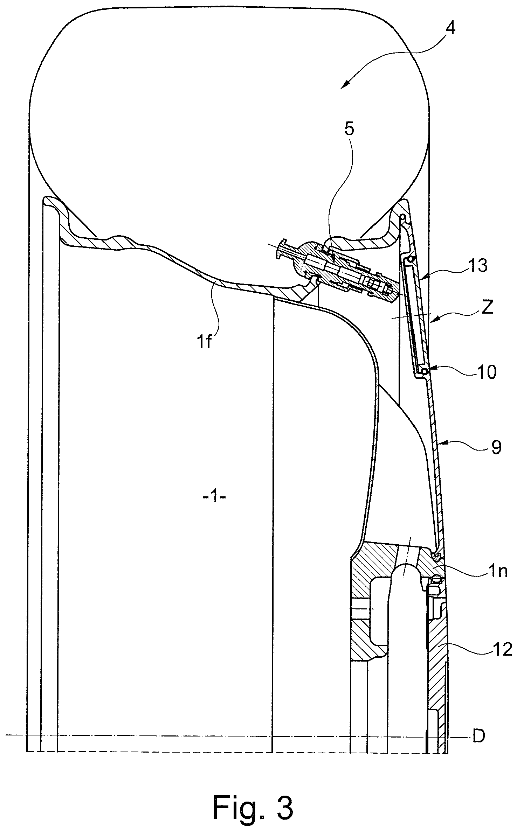

In **Figur 3** erkennt man nicht nur ein in der Felge 1f wie üblich vorgesehenes Ventil 5, sondern auch eine in der außenseitigen Verkleidung 9 im Bereich dieses Ventils 5 vorgesehene Zugangsöffnung Z zu diesem Ventil 5, welche mit einem Deckel 13 verschlossen ist, der zum Befüllen des Reifens 4 über dieses Ventil 5 aus der Verkleidung 9 entnommen werden kann, so dass die Zugangsöffnung Z freigelegt ist. Dabei ist zwischen dem Deckel 13 und der außenseitigen Verkleidung 9, welche beide in einem durchsichtigen bzw. zumindest transparenten Kunststoffmaterial ausgeführt sind, (abermals) eine Dichtung 10 vorgesehen.

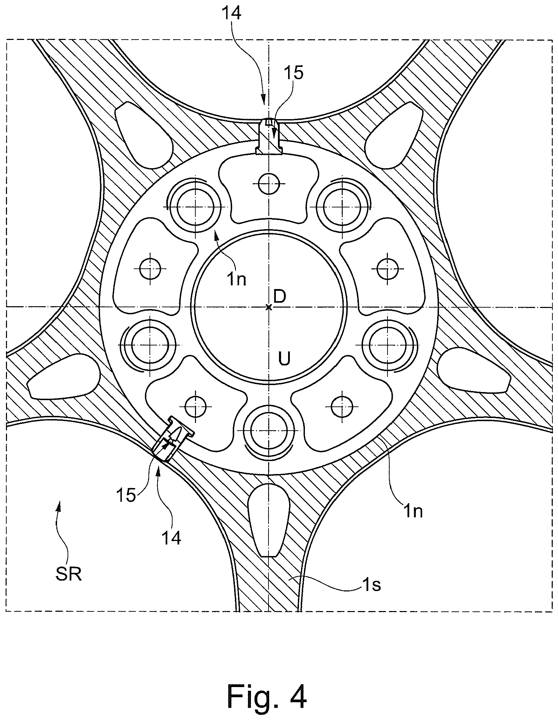

**Figur 4** zeigt einen Teil-Schnitt durch den Nabenabschnitt 1n Rades 1 in einer zur Drehachse D senkrechten Ebene. Hier erkennt man zwei im Nabenabschnitt 1n vorgesehene Belüftungsöffnungen 14 für den Speichen-Raum SR, in die jeweils ein druckabhängig selbsttätig öffnendes bzw. schließendes Membranventil 15 eingesetzt ist, über welches eine Verbindung zwischen dem Speichen-Raum SR und der Umgebung U, hier im üblichen zentralen Hohlraum des Nabenabschnitts 1n, hergestellt werden kann. Eines der beiden Membranventile 15 öffnet bei Vorliegen von Unterdruck im Speichen-Raum SR und das andere bei Vorliegen von Überdruck im Speichen-Raum SR, so dass in diesem stets im Wesentlichen Umgebungsdruck herrscht.

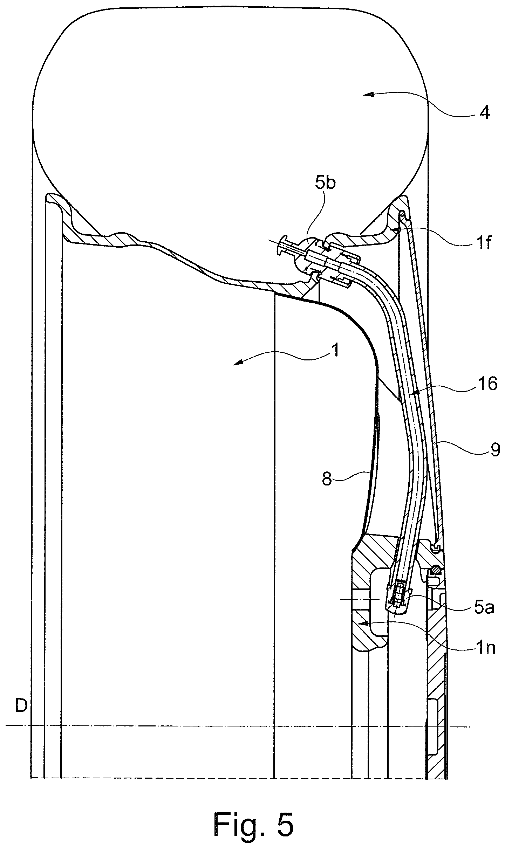

**Figur 5** zeigt anderes erfindungsgemäßes Rad 1 in einem Teilschnitt analog der bereits erläuterten Fig.3. Bei diesem Ausführungsbeispiel ist ein hinter dem abnehmbaren zentralen Abdeckelement 12 (vgl. Erläuterung zu Fig.2) angeordnetes Zentralventil 5a vorgesehen, welches über eine Luftleitung 16 mit einem in der Felge 1f (ähnlich wie bei Fig.3) montierten Felgenventil 5b zum Befüllen des Luftreifens 4 verbunden ist.

## Patentansprüche

1. Rad für ein Kraftfahrzeug mit einem Nabenabschnitt (1n), von diesem radial nach außen abgehenden Speichen (1s) und einer auf den Speichen (1s) abgestützten Felge (1f), sowie mit zwei von der Felge (1f) begrenzten Verkleidungen (8, 9) des Speichen-Raumes (SR), wobei beidseitig der Speichen (1s), das heißt deren Innenseiten zugewandt und deren Außenseiten zugewandt, je eine Verkleidung vorgesehen ist, wobei die im am Fahrzeug verbauten Zustand des Rades innenseitige und in einer Projektion in Richtung der Rad-Drehachse (D) betrachtet ringförmige Verkleidung (8) mit dem Rand des Nabenabschnitts (1n) und einem Ringbereich der Felge (1f) und/oder den Innenseiten der Speichen (1s) verklebt ist, und wobei die außenseitige Verkleidung (9) vollflächig oder in einer Projektion in Richtung der Rad-Drehachse (D) betrachtet ringförmig ausgeführt ist **dadurch gekennzeichnet, dass** die außenseitige Verkleidung (9) austauschbar unter Zwischenlage eines Dichtelements (10) in eine Nut (11a, 11i) in einem Felgenringbereich oder jeweils in einem Ringbereich der Felge (1f) und des Nabenabschnitts (1n) eingesetzt ist.

2. Rad nach Anspruch 1, wobei in der außenseitigen Verkleidung (9) eine dicht verschließbare Zugangsöffnung (Z) zu einem in der Felge (1f) vorgesehenen Luftventil (5) zum Befüllen eines auf die Felge aufgezogenen Luftreifens (4) vorgesehen ist.

3. Rad nach Ansprüche 1 mit einem im Nabenabschnitt (1n) vorgesehenen Zentralventil (5a) mit sich daran anschließender Leitung (16) für die Befüllung eines auf die Felge (1f) aufgezogenen Luftreifens (4).

4. Rad nach einem der vorangegangenen Ansprüche mit überdruckabhängig und unterdruckabhängig gesteuerten Belüftungsöffnungen (14) für den durch die Verkleidungen (8, 9) gegenüber der Umgebung (U) abgeschlossenen Speichen-Raum (SR).

5. Rad nach Anspruch 4 mit einem Luftfilterelement an der Belüftungsöffnung (14).

6. Rad nach einem der vorangegangenen Ansprüche mit einer aus einem durchsichtigen Kunststoff bestehenden außenseitigen Verkleidung (9).

7. Anordnung eines Rades nach einem der vorangegangenen Ansprüche an einem Radträger (2) eines zweispurigen Kraftfahrzeugs mit einer in der von der Felge (1f) begrenzten Radschüssel angeordneten Reibungsbremse und einer am Radträger (2) befestigten Abdeckscheibe (7), deren Rand im Bereich des inneren Felgenhorns (1h) liegt und welche eine auf die Reibungsbremse gerichtete Zufuhröffnung für Kühlluft sowie eine Abfuhröffnung für die zugeführte Kühlluft aufweist.

## Claims

1. Wheel for a motor vehicle, with a hub portion (1n), spokes (1s) extending radially outwardly from the hub portion, and a rim (1f) supported on the spokes (1s), and also with two coverings (8, 9) of the spoke area (SR), which coverings are delimited by the rim (1f), wherein a covering is provided on each of the two sides of the spokes (1s), that is to say facing the inner sides thereof and facing the outer sides thereof, wherein the covering (8) arranged on the inner side when the wheel is in the state installed on the vehicle and annular as considered in a projection in the direction of the wheel rotation axis (D) is adhesively bonded to the edge of the hub portion (1n) and to a ring region of the rim (1f) and/or the inner sides of the spokes (1s), and wherein the outside covering (9) is formed annularly over its entire area or as considered in a projection in the direction of the wheel rotation axis (D), **characterised in that** the outside covering (9) is inserted exchangeably, with a sealing element (10) arranged in between, into a groove (11a, 11i) in a rim ring region or in a ring region of each of the rim (1f) and the hub portion (1n).

2. Wheel according to claim 1, wherein a tightly closable access opening (Z) to an air valve (5) provided in the rim (1f) for filling a pneumatic tyre (4) mounted on the rim is provided in the outside covering (9).

3. Wheel according to claim 1 with a central valve (5a) provided in the hub portion (1n) with adjoining line (16) for filling a pneumatic tyre (4) mounted on the rim (1f).

4. Wheel according to any one of the preceding claims, with ventilation openings (14) controlled depending on overpressure and depending on underpressure for the spoke area (SR), which is closed off with respect to the surrounding environment (U) by the coverings (8, 9).

5. Wheel according to claim 4 with an air filter element at the ventilation opening (14).

6. Wheel according to any one of the preceding claims with an outside covering (9) consisting of a transparent plastics material.

7. Arrangement of a wheel according to any one of the preceding claims on a wheel carrier (2) of a two-track motor vehicle with a friction brake, arranged in the wheel disc delimited by the rim (1f), and a cover plate (7), which is secured to the wheel carrier (2) and the edge of which lies in the region of the inner rim flange (1h) and which, directed towards the friction brake, has a feed opening for cooling air and a discharge opening for the fed cooling air.

## Revendications

1. Roue de véhicule comprenant un segment de moyeu (1n), des rayons s'étendant radialement vers l'extérieur (1s) à partir de celui-ci et une jante (1f) s'appuyant sur les rayons (1s), ainsi que deux habillages (8, 9) de l'espace entre les rayons (SR) limités par la jante (1f), dans laquelle, il est respectivement prévu un habillage, de part et d'autre des rayons (1s), c'est-à-dire tourné vers leur côté interne et leur côté externe, l'habillage (8) situé du côté interne lorsque la roue est montée sur le véhicule et de forme annulaire lorsque observé en projection en direction de l'axe de rotation (D) de la roue, étant collé avec le bord du segment de moyeu (1n), et une zone annulaire de la jante (1f) et/ou les côtés internes des rayons (1s), et l'habillage (9) situé du côté externe (9) étant plein ou de forme annulaire lorsque observé en projection en direction de l'axe de rotation de la roue (D),
**caractérisée en ce que**
l'habillage situé du côté externe (9) est inséré en étant interchangeable avec interposition d'un élément d'étanchéité (10) dans une rainure (11a, 11i) située dans une zone annulaire de la jante ou respectivement dans une zone annulaire de la jante (1f) et du segment de moyeu (1n).

2. Roue conforme à la revendication 1,
dans laquelle dans l'habillage situé du côté externe (9) il est prévu une ouverture d'accès (Z) pouvant être fermée de façon étanche à une soupape d'air (5) située dans la jante (1f) pour permettre de gonfler un pneumatique (4) monté sur la jante.

3. Roue conforme à la revendication 1,
comprenant une soupape centrale (5a) située dans le segment de moyeu (1n) à laquelle se connecte une conduite (16) pour permettre de gonfler un pneumatique (4) monté sur la jante (1f).

4. Roue conforme à l'une des revendications précédentes,
comprenant des ouvertures de ventilation commandées en fonction d'une surpression ou d'une dépression (14) de l'espace entre les rayons (SR) fermé par les habillages (8, 9) vis-à-vis de l'environnement (U).

5. Roue conforme à la revendication 4,
comprenant un élément de filtre à air sur l'ouverture de ventilation (14).

6. Roue conforme à l'une des revendications précédentes,
comprenant un habillage situé du côté externe (9) réalisé en un matériau transparent.

7. Agencement d'une roue conforme à l'une des revendications précédentes, sur un support de roue (2) d'un véhicule automobile à deux lignes de roues comprenant un frein à friction installé dans le voile de roue délimité par la jante (1f), et un disque de recouvrement (7) fixé sur le support de roue (2) dont le bord est situé dans la zone du rebord de la jante interne (1h) et qui comporte une ouverture d'entrée de l'air de refroidissement dirigée sur le frein de friction ainsi qu'une ouverture d'évacuation de l'air de refroidissement fourni.
